# EUROPEAN PATENT APPLICATION

(11) **EP 4 542 034 A1**
(43) Date of publication of application: **23.04.2025**
(21) Application number: 24205293.4
(22) Date of filing: 08.10.2024
(51) Int. Cl.: F04B 27/04, F04B 37/14, F04B 39/00, F16C 3/04, F16C 3/12, F16C 3/18, F16C 3/28

(54) **TRANSMISSION SYSTEM FOR ELECTRIC VACUUM PUMP**

(30) Priority: 20.10.2023 CN 202311363340
(71) Applicant: ZF Commercial Vehicle Systems (Qingdao) Co., Ltd., Qingdao 266510 (CN)
(72) Inventor: Meng, Xiangtao, Qingdao City, 266510 (CN)
(74) Representative: Bremer, Ulrich

(57) **Abstract**

A transmission system for an electric vacuum pump used for transmission connection between a motor shaft (10) and a plurality of pistons (20) includes: a stud (30) coaxially connected to the motor shaft (10); a plurality of eccentric shafts (40) threadedly connected outside the stud (30) in sequence, wherein end surfaces of adjacent eccentric shafts (40) abut against each other and are fitted with each other via an anti-rotation structure (44a, 44b); and a plurality of connecting rods (50), each having a proximal end (50a) connected to one of the eccentric shafts (40), and a distal end (50b) connected to one of the pistons (20).

## Description

### Technical Field

The present invention relates to the technical field of electric vacuum pumps, and in particular, to a transmission system of an electric vacuum pump and an electric vacuum pump.

### Background Art

An electric vacuum pump of a vehicle generates vacuum by a motor driving a piston to move, which can improve the braking performance of the whole vehicle.

In a current electric vacuum pump, a motor shaft is connected to the piston via an eccentric wheel mechanism, but the eccentric wheel mechanism has a complicated structure and produces loud noise during operation. Moreover, in the case of multiple pistons, how to implement effective torque transmission between the motor shaft and each piston is also a major problem at present.

It should be noted that information disclosed in the above background art section is only used to enhance the understanding of the background of the present invention, and therefore may include information that does not constitute the prior art known to those of ordinary skill in the art.

### Summary of the Invention

In view of this, the present invention provides a transmission system of an electric vacuum pump and an electric vacuum pump. A motor shaft is in transmission connection with pistons by means of a stud, eccentric shafts and connecting rods, thereby implementing a simple structure, smooth operation and low noise. End surfaces of adjacent eccentric shafts abut against each other and are fitted with each other via an anti-rotation structure, so that torque is smoothly and safely transmitted through friction between the end surfaces of eccentric shafts, and it is easy to accurately position the eccentric shafts, thereby improving torque transmission efficiency between the motor shaft and the pistons.

An aspect of the present invention provides a transmission system of an electric vacuum pump for transmission connection between a motor shaft of the electric vacuum pump and a plurality of pistons. The transmission system includes: a stud coaxially connected to the motor shaft; a plurality of eccentric shafts threadedly connected outside the stud in sequence, wherein end surfaces of adjacent eccentric shafts abut against each other and are fitted with each other via an anti-rotation structure; and a plurality of connecting rods, each having a proximal end connected to one of the eccentric shafts, and a distal end connected to one of the pistons.

In some embodiments, the electric vacuum pump includes two pistons, and the transmission system includes two eccentric shafts; and central lines of the two eccentric shafts are in opposite positions circumferentially spaced apart by 180°, and eccentricities between the central lines of the two eccentric shafts and a central line of the motor shaft are equal to each other.

In some embodiments, the stud is a double-ended stud, and the two eccentric shafts are respectively threadedly connected to two ends of the double-ended stud.

In some embodiments, a tightening nut is arranged at an end of the stud away from the motor shaft.

In some embodiments, the anti-rotation structure is a key and slot structure provided at the end surfaces of the adjacent eccentric shafts.

In some embodiments, the transmission system further includes: a needle roller bearing arranged between the proximal end of the connecting rod and the eccentric shaft.

In some embodiments, the transmission system further includes: a pin having a first end connected to the distal end of the connecting rod and a second end connected to the piston.

In some embodiments, the transmission system further includes: a bushing arranged between the second end of the pin and the piston.

In some embodiments, the bushing is a plastic bushing containing graphite.

Another aspect of the present invention provides an electric vacuum pump. The electric vacuum pump is equipped with a transmission system according to any of the above embodiments.

Compared with the prior art, the present invention has at least the following beneficial effects.

In the transmission system of an electric vacuum pump according to the present invention, the stud coaxially connected to the motor shaft facilitates connection of the plurality of eccentric shafts. The pistons can be driven smoothly by the connecting rods, so that the vibration of the pistons during operation is smaller (that is, a swing angle of the pistons during operation is smaller), and the eccentric shafts can have a simple structure and be easy to manufacture and assemble by means of the connecting rods. In this way, in the transmission system of an electric vacuum pump according to the present invention, the motor shaft is in transmission connection with the pistons by means of the stud, the eccentric shafts and the connecting rods, thereby implementing a simple structure, smooth operation and low noise.

In addition, in the transmission system of an electric vacuum pump according to the present invention, the end surfaces of the adjacent eccentric shafts abut against each other and are fitted with each other via the anti-rotation structure, so that torque is smoothly and safely transmitted through friction between the end surfaces of eccentric shafts, and it is easy to accurately position the eccentric shafts, thereby improving torque transmission efficiency between the motor shaft and the pistons.

It should be understood that the above general description and the following detailed description are only exemplary and explanatory, and cannot limit the present invention.

### Brief Description of the Drawings

The accompanying drawings herein, which are incorporated into and constitute a part of the description, illustrate embodiments consistent with the present invention and, together with the description, are used to explain principles of the present invention. Obviously, the accompanying drawings described below show merely some of the embodiments of the present invention, and those of ordinary skill in the art would also have obtained other accompanying drawings according to these accompanying drawings without any creative effort.
FIG. 1 is a schematic diagram of a cross-sectional structure of an electric vacuum pump according to an embodiment of the present invention;
FIG. 2 is a schematic diagram of a cross-sectional structure of a transmission system of an electric vacuum pump according to an embodiment of the present invention;
FIG. 3 is a schematic diagram of an exploded structure of a transmission system of an electric vacuum pump according to an embodiment of the present invention; and
FIGS. 4 and 5 are schematic structural diagrams of two eccentric shafts of a transmission system of an electric vacuum pump according to an embodiment of the present invention.

### Detailed Description of Embodiments

Now exemplary implementations will be described more fully with reference to the accompanying drawings. However, the exemplary implementations can be implemented in many forms and should not be construed as being limited to the implementations set forth herein. On the contrary, these implementations are provided to make the present invention thorough and complete, and to fully convey the concept of the exemplary implementations to those skilled in the art.

The accompanying drawings are only schematic illustrations of the present invention, and are not necessarily drawn to scale. In the accompanying drawings, the same reference signs denote the same or similar parts, and thus the repeated description thereof will be omitted.

The terms "first", "second" and similar terms used in the specific description do not denote any order, quantity, or importance, but are merely used to distinguish between different components. In addition, in the description of the present invention, orientations or positional relationships indicated by the terms such as "proximal end" and "proximal end" are based on orientations or positional relationships shown in the accompanying drawings, which is only for convenience of describing the present invention and simplifying the description, rather than indicating or implying that a device or an element referred to must have a specific orientation or be constructed and operated in a specific orientation, and therefore cannot be construed as limiting the present invention.

It should be noted that the embodiments of the present invention and features of the various embodiments can be combined with each other without conflict.

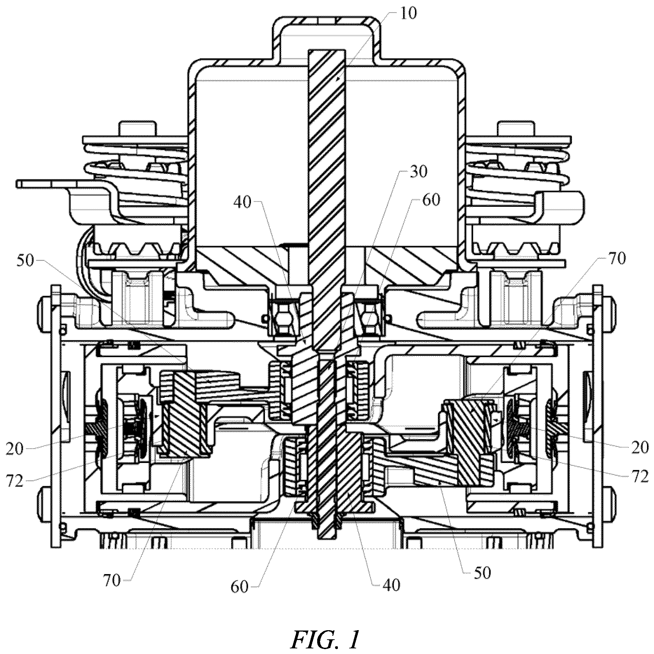

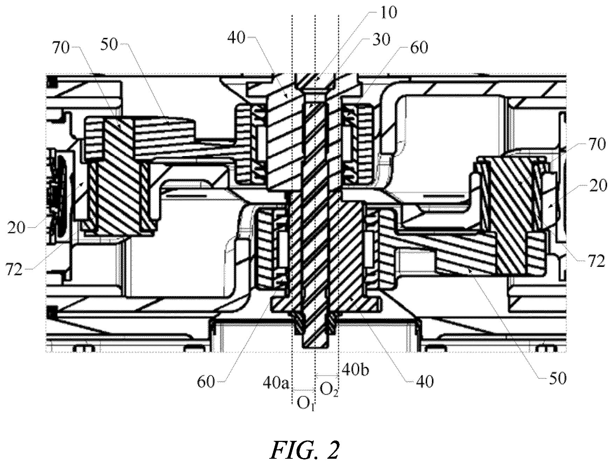

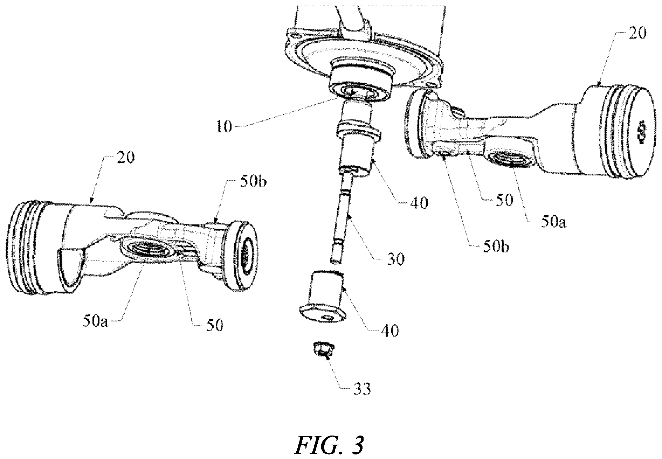

FIG. 1 shows a cross-sectional structure of an electric vacuum pump. FIG. 2 shows a cross-sectional structure of a transmission system of an electric vacuum pump. FIG. 3 shows an exploded structure of a transmission system of an electric vacuum pump. With reference to FIGS. 1 to 3, a transmission system of an electric vacuum pump according to an embodiment of the present invention is used for transmission connection between a motor shaft 10 of the electric vacuum pump and a plurality of pistons 20. The transmission system specifically includes:
a stud 30 coaxially connected to the motor shaft 10;
a plurality of eccentric shafts 40 threadedly connected outside the stud 30 in sequence, where end surfaces of adjacent eccentric shafts 40 abut against each other and are fitted with each other via an anti-rotation structure; and
a plurality of connecting rods 50, each connecting rod 50 having a proximal end 50a connected to one of the eccentric shafts 40, and a distal end 50b connected to one of the pistons 20.

In the above transmission system of an electric vacuum pump, the stud 30 coaxially connected to the motor shaft 10 facilitates connection of the plurality of eccentric shafts 40. The pistons 20 can be driven smoothly by the connecting rods 50, so that the vibration of the pistons 20 during operation is smaller (that is, a swing angle of the pistons 20 during operation is smaller), and the eccentric shafts 40 can have a simple structure and be easy to manufacture and assemble by means of the connecting rods 50. In this way, in the above transmission system of an electric vacuum pump, the motor shaft 10 is in transmission connection with the pistons 20 by means of the stud 30, the eccentric shafts 40 and the connecting rods 50, thereby implementing a simple structure, smooth operation and low noise.

In addition, in the above transmission system of an electric vacuum pump, the end surfaces of the adjacent eccentric shafts 40 abut against each other and are fitted with each other via the anti-rotation structure, so that torque is smoothly and safely transmitted through friction between the end surfaces of eccentric shafts 40, and it is easy to accurately position the eccentric shafts 40, thereby improving torque transmission efficiency between the motor shaft 10 and the pistons 20.

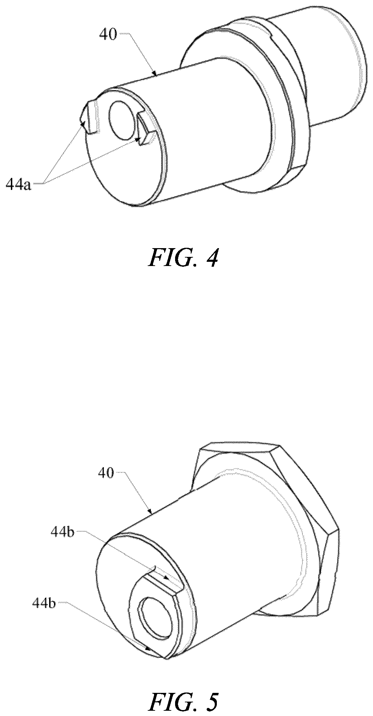

FIGS. 4 and 5 show structures of two eccentric shafts of a transmission system of an electric vacuum pump. With reference to FIGS. 1 to 5, in some embodiments,
the electric vacuum pump includes two pistons 20, and the transmission system of an electric vacuum pump includes two eccentric shafts 40 (where FIG. 4 shows an eccentric shaft 40 close to the motor shaft 10, and FIG. 5 shows an eccentric shaft 40 away from the motor shaft 10).

Central lines of the two eccentric shafts 40 (see FIG. 2, in which central lines 40a and 40b of the two eccentric shafts 40 are indicated) are in opposite positions circumferentially spaced apart by 180°, and eccentricities between the central lines of the two eccentric shafts 40 and a central line of the motor shaft 10 are equal to each other (with continued reference to FIG. 2, in which eccentricities O₁ and O₂ between the central lines 40a and 40b of the two eccentric shafts 40 and the central line of the motor shaft 10 are equal to each other).

By means of the design in which the central lines of the two eccentric shafts 40 are in the opposite positions circumferentially spaced apart by 180°, the two pistons 20 driven by the two eccentric shafts 40 are also in opposite positions circumferentially spaced apart by 180°. The eccentricities between the central lines of the two eccentric shafts 40 and the central line of the motor shaft 10 are equal to each other, so that forces of the two pistons 20 driven by the two eccentric shafts 40 on the motor shaft 10 cancel each other out, thereby effectively reducing noise and power consumption during operation of the pistons 20.

A specific value of the eccentricities between the central lines of the eccentric shafts 40 and the central line of the motor shaft 10 may be set as required, and is, for example, 3.75 mm, but it is not limited thereto.

In other embodiments, the number of pistons 20 in the electric vacuum pump may be adjusted according to an actual situation, and the number of eccentric shafts 40 in the transmission system of the electric vacuum pump is then adjusted accordingly. Further, the central lines of the eccentric shafts 40 may be evenly distributed along a circumference with respect to the central line of the motor shaft 10. For example, if the number of eccentric shafts 40 is three, central lines of two adjacent eccentric shafts 40 are spaced apart by 120° and eccentricities between the central lines of the eccentric shafts 40 and the central line of the motor shaft 10 are equal to each other, so that forces of pistons 20 driven by the eccentric shafts 40 on the motor shaft 10 cancel each other out, thereby effectively reducing noise and power consumption during operation of the pistons 20, and causing the entire electric vacuum pump to operate smoothly.

In some embodiments, the stud 30 is a double-ended stud, and the two eccentric shafts 40 are respectively threadedly connected to two ends of the double-ended stud.

The two eccentric shafts 40 are fixed by the double-ended stud, so as to achieve a high fitting accuracy and facilitate assembly.

In some embodiments, a tightening nut 33 is arranged at an end of the stud 30 away from the motor shaft 10. By means of the tightening nut 33, it is ensured that the eccentric shafts 40 are stably threadedly connected outside the stud 30 without loosening.

In some embodiments, the anti-rotation structure is a key and slot structure provided at the end surfaces of the adjacent eccentric shafts 40. The key and slot structure may specifically include a key 44a provided at one of the eccentric shafts 40 and a slot 44b provided at the other eccentric shaft 40. Adjacent eccentric shafts 40 are more easily and accurately positioned through the fitting of the key 44a and the slot 44b, so as to improve the torque transmission efficiency. Anti-rotation between the adjacent eccentric shafts 40 is implemented, so that torque is transmitted between the adjacent eccentric shafts 40 through friction between the end surfaces, and power from the motor shaft 10 is stably transmitted to the pistons 20.

In some embodiments, the transmission system further includes: a needle roller bearing 60 arranged between the proximal end 50a of the connecting rod 50 and the eccentric shaft 40. With the needle roller bearing 60, a large radial torque can be transmitted, so that the torque of the motor shaft 10 can be smoothly transmitted to the pistons 20.

In some embodiments, the transmission system further includes: a pin 70, the pin 70 having a first end connected to the distal end 50b of the connecting rod 50 and a second end connected to the piston 20. The two ends of the pin 70 are fixedly inserted into and connected to the distal end 50b of the connecting rod 50 and the piston 20 respectively, so that the connecting rod 50 is securely connected to the piston 20.

In some embodiments, the transmission system further includes: a bushing 72 arranged between the second end of the pin 70 and the piston 20. Further, in some embodiments, the bushing 72 is a plastic bushing containing graphite. The plastic bushing containing graphite may be used as an oilless bearing, which can achieve lower noise and lower costs.

An embodiment of the present invention further provides an electric vacuum pump, which is equipped with a transmission system described according to any of the above embodiments.

In the electric vacuum pump equipped with the above transmission system, the motor shaft 10 can be in transmission connection with the pistons 20 by means of the stud 30, the eccentric shafts 40 and the connecting rods 50, thereby implementing a simple structure, smooth operation and low noise. The end surfaces of the adjacent eccentric shafts 40 abut against each other and are fitted with each other via the anti-rotation structure, so that torque is smoothly and safely transmitted through friction between the end surfaces of eccentric shafts 40, and it is easy to accurately position the eccentric shafts 40, thereby improving torque transmission efficiency between the motor shaft 10 and the pistons 20.

To sum up, in the electric vacuum pump and the transmission system thereof according to the present invention, the stud 30 coaxially connected to the motor shaft 10 facilitates connection of the plurality of eccentric shafts 40. The pistons 20 can be driven smoothly by the connecting rods 50, so that the vibration of the pistons 20 during operation is smaller (that is, a swing angle of the pistons 20 during operation is smaller), and the eccentric shafts 40 can have a simple structure and be easy to manufacture and assemble by means of the connecting rods 50. In this way, in the electric vacuum pump and the transmission system thereof according to the present invention, the motor shaft 10 is in transmission connection with the pistons 20 by means of the stud 30, the eccentric shafts 40 and the connecting rods 50, thereby implementing a simple structure, smooth operation and low noise.

In addition, in the electric vacuum pump and the transmission system thereof according to the present invention, the end surfaces of the adjacent eccentric shafts 40 abut against each other and are fitted with each other via the anti-rotation structure, so that torque is smoothly and safely transmitted through friction between the end surfaces of eccentric shafts 40, and it is easy to accurately position the eccentric shafts 40, thereby improving torque transmission efficiency between the motor shaft 10 and the pistons 20.

The above is a further detailed description of the present invention with reference to the specific preferred implementations, and it cannot be considered that the specific implementation of the present invention is limited to these descriptions. For those of ordinary skill in the art of the present invention, several simple deductions or substitutions can be further made without departing from the concept of the present invention, and should be regarded as falling within the scope of protection of the present invention.

## Claims

1. A transmission system of an electric vacuum pump for transmission connection between a motor shaft of the electric vacuum pump and a plurality of pistons, **characterized in that** the transmission system comprises:
a stud coaxially connected to the motor shaft;
a plurality of eccentric shafts threadedly connected outside the stud in sequence, wherein end surfaces of adjacent eccentric shafts abut against each other and are fitted with each other via an anti-rotation structure; and
a plurality of connecting rods, each having a proximal end connected to one of the eccentric shafts, and a distal end connected to one of the pistons.

2. The transmission system according to claim 1, **characterized in that** the electric vacuum pump comprises two pistons, and the transmission system comprises two eccentric shafts; and
central lines of the two eccentric shafts are in opposite positions circumferentially spaced apart by 180°, and eccentricities between the central lines of the two eccentric shafts and a central line of the motor shaft are equal to each other.

3. The transmission system according to claim 2, **characterized in that** the stud is a double-ended stud, and the two eccentric shafts are respectively threadedly connected to two ends of the double-ended stud.

4. The transmission system according to any one of claims 1 to 3, **characterized in that** a tightening nut is arranged at an end of the stud away from the motor shaft.

5. The transmission system according to any one of claims 1 to 4, **characterized in that** the anti-rotation structure is a key and slot structure provided at the end surfaces of the adjacent eccentric shafts.

6. The transmission system according to any one of claims 1 to 5, **characterized by** further comprising:
a needle roller bearing arranged between the proximal end of the connecting rod and the eccentric shaft.

7. The transmission system according to any one of claims 1 to 6, **characterized by** further comprising:
a pin having a first end connected to the distal end of the connecting rod and a second end connected to the piston.

8. The transmission system according to claim 7, **characterized by** further comprising:
a bushing arranged between the second end of the pin and the piston.

9. The transmission system according to claim 8, **characterized in that** the bushing is a plastic bushing containing graphite.

10. An electric vacuum pump, **characterized in that** it is equipped with a transmission system according to any one of claims 1 to 9.
